# EUROPÄISCHE PATENTANMELDUNG

(11) **EP 1 440 823 A1**
(43) Veröffentlichungstag der Anmeldung: **28.07.2004**
(21) Anmeldenummer: 03027978.0
(22) Anmeldetag: 05.12.2003
(51) Int. Cl.: B60C 23/00

(54) **Lagerungsanordnung für ein Rad eines Fahrzeugs**

(30) Priorität: 21.01.2003 DE 10302444
(71) Anmelder: GKN Walterscheid GmbH, 53797 Lohmar (DE)
(72) Erfinder: Nienhaus, Clemens, 53818 Neunkirchen-Seelscheid (DE)
(74) Vertreter: Harwardt, Günther, Dipl.-Ing.

(57) **Zusammenfassung**

Die Erfindung betrifft eine Lagerungsanordnung für ein Rad 1 eines Fahrzeugs, dem ein mit Luft über eine Reifenfüllanlage füll- oder entlüftbarer Reifen 4 zugeordnet ist und die ein Trägerelement 5 sowie ein mittels einer Wälzlageranordnung mit zwei Wälzkörperreihen 7, 8 darauf gelagerte Radnabe 9 umfasst. Über eine Dichtungsanordnung mit zwei Abschlusselementen 29, 30 ist eine Luftkammer 13 zwischen den beiden Wälzkörperreihen 7, 8 gebildet, welche zusätzlich Dichtungen 32, 39 umfassen. Die Luftzuführung erfolgt über einen ersten Luftführungskanal 12 ausgehend vom Trägerelement 5 zur Luftkammer 13 und von dort über den zweiten Luftführungskanal 14, das Ventil 15 und die Luftleitung 16 zur Felge 2 und damit in den vom Reifen 4 umschlossenen Raum.

## Beschreibung

Die Erfindung betrifft eine Lagerungsanordnung für ein Rad eines Fahrzeuges, dem ein mit Luft über eine Reifenfüllanlage füll- oder entlüftbarer Reifen zugeordnet ist.

Bei Traktoren ist eine Veränderung des Luftdrucks im Reifen besonders von Bedeutung, da bei der Arbeit auf dem Feld mit einem niedrigeren Reifendruck eine geringere Bodenverdichtung und darüber hinaus eine höhere Traktion erzielbar sind. Bei für Traktoren hohen Geschwindigkeiten, z.B. 40 km/h, mit niedrigem Luftdruck ist jedoch eine Fahrstabilität nicht gewährleistet. Gleiches gilt auch für auf mit Luftreifen versehenen Rädern bewegbaren schweren Anhängern, z.B. großvolumiger Güllefässer.

Der Fachzeitschrift profi-magazin für agrartechnik, 10/1995 "Der Luftdruck im Reifen: Kleine Ursache, große Wirkung" sind verschiedene Regelanlagen zu entnehmen. Danach sind die Drehübertrager entweder je nach Achstyp an der Innen- oder Auβenseite des Rades dem Radflansch zugeordnet. Bei preiswerteren Systemen erfolgt die Luftzuführung außen am Reifen vorbei bis zur Drehdurchführung. Bei der Anordnung als Zwischenflansch zwischen dem Rad und dem Radflansch erfolgt die Befestigung der Drehdurchführung über die Radschrauben. Diese Ausführung hat den Vorteil, dass keine außen freiliegenden Leitungen vorhanden sind. Die jedoch ohnehin kritische Schraubverbindung wird durch die vergrößerte freie Biegelänge der Radschrauben noch höher belastet.

In der US 4 804 027 ist eine Lagerungsanordnung mit einer Vorrichtung zum Befüllen und Entlüften eines zu einem Rad eines Fahrzeugs gehörenden und mit Luft befüllbaren Reifens beschrieben, die in die Radnabe die den Radflansch trägt, integriert ist. Die Radnabe bildet das Außenteil mit einem Kanal, an welchen eine Verbindungsleitung anschließbar ist, die zum Reifen führt. In der Radnabe ist ein Innenteil gelagert, welches ortsfest gehalten ist und mit einem Anschluss zu einer Druckversorgung versehen ist. Zwei dem Innenteil fest zugeordnete und zueinander beabstandete Dichtungen schließen zusammen mit einer Ventilanordnung, die axial zur Lagerung der Radnabe versetzt ist, eine ringförmige Luftkammer ab. Es handelt sich um ein federbelastetes Ventil, das bei Überschreiten eines bestimmten Druckes in der Luftkammer geöffnet wird und die Luft in einen Kanal der Radnabe strömen lässt. Das Ventil ist jedoch so ausgebildet, dass es erst öffnet, wenn die Dichtungen sich gegen die entsprechende radial außen liegende Bohrungsfläche der Radnabe angelegt haben. Ein Nachteil besteht darin, die Nabe und das Innenteil unabhängig voneinander an einem weiterem Bauteil gelagert sind, so dass radiale Abweichungen sich voll auf die Dichtungen auswirken und die axiale Baulänge groß ist.

Die DE-OS 16 05 743 beschreibt eine Vorrichtung zum Regeln des Reifendruckes bei Kraftfahrzeugen. Sie beschreibt ferner eine Drehdurchführung mit einem Außenteil und einem Innenteil, welche relativ zueinander drehbar und mit Berührungsdichtungen zueinander abgedichtet sind, und ständig einer Relativbewegung unterliegen.
Eine Reifenfüllanlage ist beispielsweise auch in der DE-OS 19 07 082 beschrieben. Aus dieser ist auch bereits herleitbar, dass es für Fahrzeuge mit relativ hohen Umfangsgeschwindigkeiten notwendig ist, die Drehdurchführung während des Normalbetriebes, d.h. während der Nichtbetätigung der Reifenfüllanlage so zu schalten, dass kein Druck ansteht, da erkannt wurde, dass Probleme an den Dichtelementen der Drehverbindung auftreten. Diese Problematik wird besonders deutlich, wenn große Relativgeschwindigkeiten vorhanden sind, wie das beispielsweise beim Einsatz bei Traktoren der Fall ist.

Die DE 698 02 085 T2 beschreibt eine Lagerungsanordnung für eine Radnabe eines Fahrzeugs, wobei in diese eine Drehdurchführung für eine Luftführungsverbindung zwischen einer Reifenfüllanlage und einem dem Radflansch der Radnabe zugeordneten Fahrzeugrad mit Reifen eingeschaltet ist. Die Lagerungsanordnung umfasst ein Trägerelement in Form einer Hülse, die eine Längsachse bildet und die mit den Lagerinnenringen zweier jeweils eine der Wälzkörperreihen bildenden Kegelrollenlagern verbunden ist. Die Lageraußenringe der beiden Kegelrollenlager sind an Sitzflächen des Lagerabschnittes. einer Radnabe angebracht. Der Lagerabschnitt und das als Hülse gestaltete Trägerelement mit den Lagerinnenringen sind koaxial umeinander angeordnet, so dass zwischen diesen ein Hohlraum gebildet wird. In diesem Hohlraum ist eine Drehdurchführung angeordnet, welche aus zwei umeinander angeordneten Zufuhrringen und zwei zwischen diesen radial wirkenden Dichtringen gebildet ist. Diese umgrenzen zusammen eine Luftkammer. Der innere Zufuhrring weist einen Abschnitt eines Luftführungskanals auf, der zur Luftkammer offen ist und einen axialen Abschnitt umfasst, der mit einem axialen Kanal im benachbarten Lagerinnenring in Verbindung steht. Dieser Kanal steht wiederum mit einem weiteren Kanal in einem Ringstutzen in Verbindung, an den eine Luftzufuhrleitung angeschlossen ist. Zwischen dem inneren Zufuhrring und dem Lagerinnenring und diesem und dem Ringstutzen, sowie allen diesen und der Hülse als Trägerelement muss eine Abdichtung erfolgen. Der äußere Zufuhrring ist mit einem Luftführungskanal versehen, der von einer Innenfläche des Luftzufuhrringes ausgeht und auch durch die Radnabe verläuft und zu einer Außenfläche der Radnabe offen ist. Zwischen diesen beiden Abschnitten des Lüftführungskanals ist eine Abdichtung vorzusehen. Die radial wirkenden Dichtungen zwischen den Zufuhrringen sind im Betrieb ständig einer reibenden Relativbewegung und damit entsprechendem Verschleiß unterworfen. Der Aufbau erfordert eine Vielzahl von Dichtstellen.

Der Erfindung liegt die Aufgabe zugrunde, eine Lagerungsanordnung vorzuschlagen, die eine Drehdurchführung bildet, bei der eine sichere Abdichtung über eine lange Lebensdauer erzielt wird und die kurzbauend gestaltet ist.

Gelöst wird diese Aufgabe durch eine Lagerungsanordnung für ein Rad eines Fahrzeugs, dem ein mit Luft über eine Reifenfüllanlage füll- oder entlüftbarer Reifen zugeordnet ist, umfassend
- ein Trägerelement,
   - das eine Längsachse bildet,
   - das um die Längsachse undrehbar gehalten ist,
   - das mindestens eine Sitzfläche für mindestens einen Lagerring und/oder die mindestens eine Laufbahn einer Wälzlageranordnung mit zwei Wälzkörperreihen bildet, und
   - das einen ersten Luftführungskanal aufweist, der einerseits zur Verbindung mit der Reifenfüllanlage dient und der andererseits zu einer Fläche des Trägerelementes offen ist, welche sich zwischen den Wälzkörperreihen befindet,
- eine Radnabe,
   - die einen Radflansch aufweist, mit dem das Rad verbindbar ist,
   - die einen Lagerabschnitt aufweist, der koaxial zum Trägerelement angeordnet ist,
   - wobei ein Abschnitt des Trägerelements, dem die Wälzkörperreihen zugeordnet sind, und der Lagerabschnitt umeinander angeordnet sind und eine Luftkammer bilden,
   - die einen zweiten Luftführungskanal aufweist, der zur Luftkammer und zu einer Außenfläche der Radnabe offen ist, wobei die Öffnung zur Außenfläche zur Verbindung mit dem Reifen über Verbindungsmittel dient,
- eine Dichtungsanordnung
   - mit zwei Abschlusselementen, die axial mit Abstand voneinander jeweils zu einer Wälzkörperreihe hin angeordnet sind und einen radialen Abstand zwischen dem Trägerelement und dem Lagerabschnitt der Radnabe überbrücken und die Luftkammer seitlich abschließen, und
   - welche Dichtungen und Dichtringanordnungen umfasst, die zwischen jeweils einem Abschlusselement und dem Trägerelement und zwischen jeweils einem Anschlusselement und der Radnabe abdichten.

Von Vorteil bei dieser Ausbildung ist, dass der Zwischenraum zwischen den Wälzkörperreihen genutzt werden kann, um die Dichtungsanordnung unterzubringen. Ein axialer Abstand der Wälzkörperreihen ist erforderlich, um in der Lagerungsanordnung nicht nur die Auflast sondern auch Momente aufnehmen zu können, die durch Seitenkräfte auf die Reifen eingeleitet werden. Darüber hinaus besteht der Vorteil, dass in diesem Bereich keine Exzentrizitäten auftreten können, so dass ein exakter Rundlauf der zur Dichtungsanordnung gehörenden Bauteile gewährleistet ist. Die Abschlusselemente können darüber hinaus genutzt werden, um die Wälzkörperreihen zur Luftkammer hin abzudichten. Die Anzahl von Bauteilen und Dichtstellen ist gering.

In Ausgestaltung der Erfindung ist vorgesehen, dass die Dichtringanordnungen in der Luftkammer
- je Abschlusselement einen ersten Dichtring, der eine radial verlaufende erste Dichtfläche zur dichtenden axialen Anlage an einer ersten Gegendichtfläche des zugehörigen Abschlusselementes und eine parallel zur ersten Dichtfläche verlaufende zweite Dichtfläche aufweist und der entlang der Längsachse axial verschiebbar angeordnet ist und
- je Abschlusselement einen zweiten Dichtring aufweist, der einen ringförmigen Befestigungsabschnitt und einen daran ansetzenden ringmembranartigen Dichtabschnitt aufweist, der mit einer dem Befestigungsabschnitt entfernten Ringkante, dem Befestigungsabschnitt abgewandt, axial an der zweiten Dichtfläche des ersten Dichtringes anliegt.

Von Vorteil bei dieser Ausbildung ist, dass zwischen den als Weichdichtung ausgebildeten zweiten Dichtringen und den zweiten Dichtflächen des ersten Dichtringes keine Drehzahldifferenz gegeben ist, so dass sie praktisch keinem Verschleiß unterliegen. Die ersten Dichtringe sind insbesondere formstabil gestaltet und besitzen eine plane erste Dichtfläche, die gegen die entsprechende Gegendichtfläche des zugehörigen Abschlusselementes anliegt. Vorzugsweise ist der erste Dichtring aus einem formstabilen Kunststoff hergestellt. Es ist jedoch auch eine Ausbildung mit einem Basisring aus Kunststoff oder Metall möglich, welcher eine Beschichtung zumindest an der ersten Dichtfläche trägt. Über die ersten Dichtringe wird der Radialspalt zum Abschlusselement und über die zweiten Dichtringe der Axialspalt zwischen jedem ersten Dichtring und dem Bauteil, dem die zweiten Dichtringe zugeordnet sind, abgedichtet. Der Dichtabschnitt des zweiten Dichtringes beaufschlagt den ersten Dichtring in axialer Richtung zur Anlage gegen die Gegendichtfläche des zugehörigen Abschlusselementes. Dies erfolgt unter dem in der Kammer herrschenden Druck, wobei, da der erste Dichtring entlang der Längsachse verschiebbar angeordnet ist, er so in Anlage zum Abschlusselement gehalten wird, dass auch ein Verschleißausgleich erfolgen kann. Der Dichtabschnitt des zweiten Dichtringes kann so ausgelegt werden, dass seine freie Ringkante, die zur Anlage gegen die zweite Dichtfläche des ersten Dichtringes kommt, auch noch bei dem gewünschten Verschleißausgleich wirksam in Anlage zur zweiten Dichtfläche des ersten Dichtringes gehalten wird.

Bei Zuordnung des ersten Dichtringes und des zweiten Dichtringes zu dem Lagerabschnitt der Radnabe ist eine Dichtung zwischen dem Abschlusselement und dem Trägerelement vorgesehen. Das Abschlusselement ist dann mit dem Trägerelement praktisch verbunden und steht zu diesem still. Entsprechend ist bei einer Zuordnung des ersten Dichtringes und des zweiten Dichtringes zum Lagerabschnitt der Radnabe vorgesehen, das jeweils eine Dichtung zwischen den Abschlusselementen und der Radnabe vorgesehen ist. Damit rotieren die Abschlusselemente mit der Radnabe.

Vorzugsweise ist das Trägerelement durch einen Achszapfen gebildet. Es kann aber auch ein eigenständiges Bauteil sein, das beispielsweise mit der Radaufhängung eines Fahrzeuges verbunden ist.

Vorzugsweise sind die zur Dichtringanordnung in der Luftkammer gehörenden ersten Dichtringe und zweiten Dichtringe dem Trägerelement zugeordnet, wobei die ersten Dichtringe axial verschiebbar und die zweiten Dichtringe mit einem Befestigungsabschnitt ortsfest am Trägerelement angebracht sind. Alternativ ist es möglich, die zur Dichtringanordnung in der Luftkammer gehörenden ersten Dichtringe und zweiten Dichtringe dem Lagerabschnitt der Radnabe zuzuordnen, wobei ebenfalls die ersten Dichtringe axial verschiebbar und die zweiten Dichtringe mit einem Befestigungsabschnitt ortsfest am Lagerabschnitt angebracht sind. Hierdurch sollen eindeutige Bewegungsverhältnisse erzielt werden. Es soll verhindert werden, dass eine Relativbewegung in Umfangsrichtung zwischen dem ersten Dichtring und dem zweiten Dichtring entsteht.

Um die Anpressverhältnisse hinsichtlich der Anlage des ersten Dichtringes mit seiner ersten Dichtfläche an der Gegendichtfläche des zugehörigen Abschlusselementes so auslegen zu können, dass bei den herrschenden Druckverhältnissen in der Kammer keine Überbeanspruchung und kein übermäßiger Verschleiß erfolgt, jedoch die erforderliche Dichtigkeit erzielt wird, ist vorgesehen, dass die erste Dichtfläche des ersten Dichtringes als Ringfläche gestaltet ist und einen kleinen Durchmesser und einen großen Durchmesser aufweist, dass der erste Dichtring ferner einen Innendurchmesser und einen Außendurchmesser aufweist, und dass bei Zuordnung des ersten Dichtringes zum Trägerelement oder zum Lagerabschnitt der kleine Durchmesser gleich/größer als der Innendurchmesser und der große Durchmesser gleich/kleiner als der Außendurchmesser ist, wobei die erste Dichtfläche kleiner als eine vom Innendurchmesser und Außendurchmesser begrenzte Ringfläche ist.

Der auf die Ringfläche des ersten Dichtringes, die die Entlastungskammer begrenzt, einwirkende Druck wirkt dabei dem auf den Dichtabschnitt des zweiten Dichtringes und die Restfläche der zweiten Dichtfläche des ersten Dichtringes, die nicht vom Dichtabschnitt der zweiten Dichtung abgedeckt ist, in Belastungsrichtung einwirkenden Druck entgegen, wobei die Entlastungskammer dem gleichen Druck unterliegt wie die Luftkammer. Durch eine Veränderung der Lage der ersten Dichtfläche in radialer Richtung, d.h. durch unterschiedliche Größenauslegung des kleinen Durchmessers und entsprechende Veränderung des großen Durchmessers bei beispielsweise gleichem Flächeninhalt können die resultierenden Anpresskräfte des ersten Dichtringes mit seiner ersten Dichtfläche gegen die zugehörige Gegendichtfläche und daraus folgend die Flächenpressung verändert werden.

In der Zeichnung sind die Zuordnung einer Lagerungsanordnung zu einem Rad und die Gestaltung derselben schematisch dargestellt.

Es zeigt
- Figur 1: einen Schnitt durch ein Rad in Zuordnung zu einer Lagerungsanordnung eines Fahrzeugs,
- Figur 2: einen Längsschnitt durch die Lagerungsanordnung gemäß der Erfindung in einer ersten Ausführungsform,
- Figur 3: ein Detail X gemäß Figur 2 bezüglich der Anordnung der Dichtungen im vergrößerten Maßstab,
- Figur 4: einen Halblängsschnitt durch einen ersten Dichtungsring, wie er bei der Ausführungsform gemäß Figur 2 eingebaut ist,
- Figur 5: einen Halblängsschnitt durch eine zweite Ausführungsform des ersten Dichtringes und
- Figur 6: einen Halblängsschnitt durch eine zweite Ausführungsform einer Lagerungsanordnung gemäß der Erfindung.

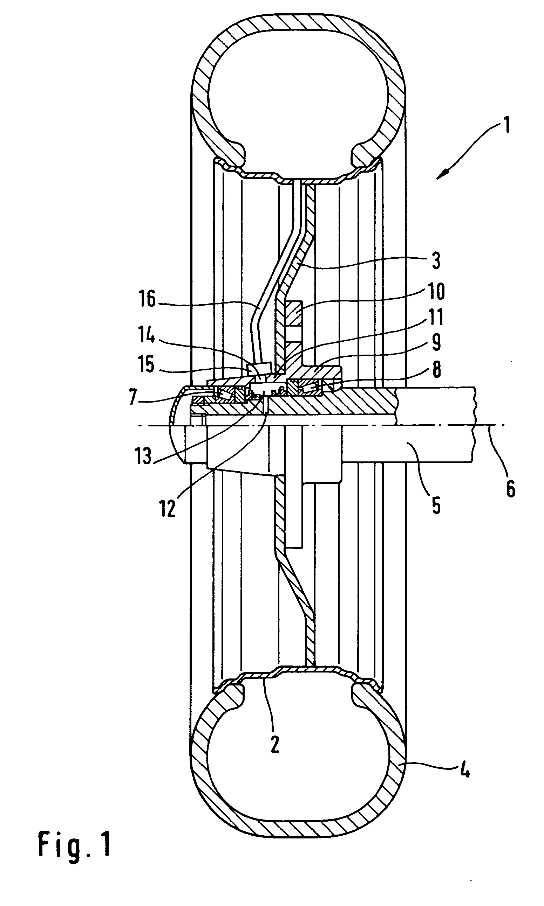

Das in Figur 1 dargestellte Rad 1 umfasst eine Felge 2 mit dem Radkörper 3 und den Reifen 4, der einen Luftraum zusammen mit der Felge 2 bildet. Ferner ist ein Abschnitt eines Trägerelementes 5 in Form eines Achszapfens ersichtlich, der eine Längsachse 6 bildet. Auf diesem Trägerelement 5 in Form des Achszapfens sind eine erste Wälzkörperreihe 7 und eine zweite Wälzkörperreihe 8 mit Abstand zueinander angeordnet. Auf diesen ist eine Radnabe 9 gelagert. Die Radnabe 9 umfasst einen Radflansch 10 und einen Lagerabschnitt 11, der sich beidseitig des Radflansches 10 in Achsrichtung entlang der Längsachse 6 erstreckt. Zwischen den beiden Wälzkörperreihen 7, 8 ist eine Luftkammer 13 gebildet, die durch eine nachfolgend noch beschriebene Dichtungsanordnung zu den Wälzkörperreihen 7, 8 hin abgedichtet ist. Auf der Längsachse 6 zentriert und rechtwinklig dazu verläuft ein erster Luftführungskanal 12, der in der Luftkammer 13 mündet. Durch den Lagerabschnitt 11 der Radnabe 9 verläuft ein zweiter Luftführungskanal 14. An diesen zweiten Luftführungskanal 14 ist ein Ventil 15 zur Steuerung angeschlossen, das über eine Luftleitung 16 mit der Felge 2 und über diese mit dem vom Reifen umschlossenen Luftraum verbunden ist. Der erste Luftführungskanal 12 steht mit einer zentral angeordneten Druckluftversorgungseinrichtung bzw. Reifenfüllanlage in Verbindung. Solange von der zentralen Druckversorgungseinrichtung aus kein Druck in dem ersten Luftführungskanal 12 ansteht, ist die Dichtungsanordnung im Bereich zwischen den Wälzkörperreihen 7, 8 druckfrei. Der erste Luftführungskanal 12 ist nach außen, d.h. am Ende des Trägerelementes 5 durch einen Stopfen 27 abgedichtet.

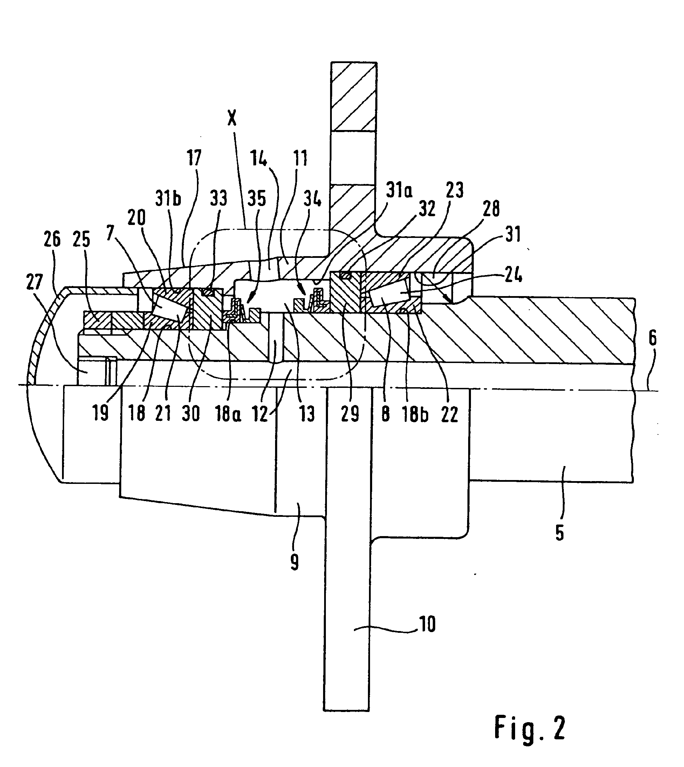

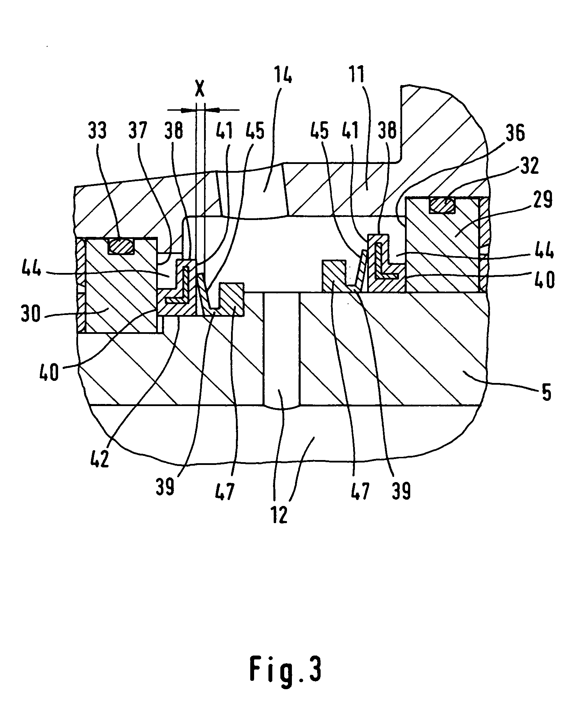

Nachfolgend wird anhand der Figuren 2 und 3 der generelle Aufbau der Lagerungsanordnung und der zugehörigen Dichtungsanordnung im einzelnen beschrieben. Es ist ein Abschnitt des Trägerelementes 5 in Form eines Achszapfens erkennbar, der auf der Radnabe 9 mit Hilfe der beiden Wälzkörperreihen 7, 8 gelagert ist. Es ist ferner erkennbar, dass der Radflansch 10 von einem Lagerabschnitt 11 ausgeht, der in Richtung der Längsachse X beidseitig über den Radflansch 10 vorsteht. Es ist ferner der zweite Luftführungskanal 14 erkennbar, der durch den Lagerabschnitt 11 hindurchgeführt ist und von der Luftkammer 13 aus zur Außenfläche 17 des Lagerabschnittes 11 führt. Das Trägerelement 5 weist außen zylindrische Flächen auf, die die in Abschnitten aufgebaute Sitzfläche 18, 18a und 18b bilden. Auf der Sitzfläche 18 sitzt der erste Lagerinnenring 19 der ersten Wälzkörperreihe 7. Der erste Lagerinnenring 19 bildet eine Lauffläche für erste Wälzkörper 21 in Form von Kegelrollen. Diese stützen sich gegen Außenlaufflächen des ersten Lageraußenringes 20 ab. Im axialen Abstand entlag der Längsachse 6 sitzt auf der Sitzfläche 18b, die im Verhältnis zu den Sitzflächen 18 und 18a einen jeweils stufenförmig vergrößerten Durchmesser aufweist, der zweite Lagerinnenring 22, der zur zweiten Wälzkörperreihe 8 gehört. Dieser liegt gegen eine axiale Schulter des Trägerelementes 5 an. Er bildet eine Lauffläche für die zweiten Wälzkörper 24 in Form von Kegelrollen. Gegen diese stützt sich wiederum der zweite Lageraußenring 23 ab. In dem Lagerabschnitt 11 der Radnabe 9 befindet sich eine gestufte zylindrische Bohrung, die im Durchmesser gestufte Flächen 31, 31 a und 31 b bildet. Zwischen der zylindrischen Flächen 31 und der dazu im Durchmesser reduzierten Fläche 31 a ist eine Schulter gebildet, gegen die sich ein erstes Abschlusselement 29 abstützt. Das erste Abschlusselement 29 ist über eine erste Dichtung 32 zu dem Lagerabschnitt 11 der Radnabe 9 abgedichtet. Gegen diese stützt sich der zweite Lageraußenring 23 der zweiten Wälzkörperreihe 8 ab. Das zweite Abschlusselement 30 stützt sich in Achsrichtung der Längsachse 6, d.h. in Richtung zur zweiten Wälzkörperreihe 8 hin gegen eine Schulter ab, die radial nach innen zur Längsachse 6 über die zylindrische Fläche 31 b des Lagerabschnittes 11 vorsteht. Das zweite Abschlusselement 30 ist ebenfalls über eine zweite Dichtung zum Lagerabschnitt 11 der Radnabe 9 abgedichtet. Gegen das zweite Abschlusselement 30 stützt sich der erste Lageraußenring 20 der ersten Wälzkörperreihe 7 axial ab. Zwischen dem zweiten Abschlusselement 30 und dem ersten Lagerinnenring 19 ist kein reibender Kontakt gegeben. Der erste Lagerinnenring 19 wird durch eine auf ein Gewinde am Ende des Trägerelementes 5 aufgeschraubte Mutter axial beaufschlagt, so dass die beiden Wälzkörperreihen 7, 8 vorgespannt werden können. Ferner ist das Ende der Lagerungsanordnung, an dem sich die Mutter 25 befindet, durch eine Dichtkappe 26 abgeschlossen, die in die als Bohrung gestaltete zylindrische Fläche 31 b eingesetzt ist.

Im Bereich der Luftkammer 13 ist zu den beiden Abschlusselementen 29, 30 hin jeweils eine Ringanordnung 34 bzw. 35 vorgesehen, welche anhand der Figur 3 näher erläutert wird. Die beiden Ringanordnungen 34, 35 sind im Prinzip gleich aufgebaut, unterscheiden sich jedoch hinsichtlich der Durchmesserverhältnisse voneinander, da sie unterschiedliche Durchmesser aufweisenden Sitzflächen 18a, 18b zugeordnet sind.

Das erste Abschlusselement 29 bildet eine erste Gegendichtfläche 36. Das zweite Abschlusselement 30 weist der ersten Gegendichtfläche 36 gegenüberliegend eine zweite Gegendichtfläche 37 auf. Die beiden Abschlusselemente 29, 30 sind im axialen Abstand zueinander entlang der Längsachse 6 angeordnet.

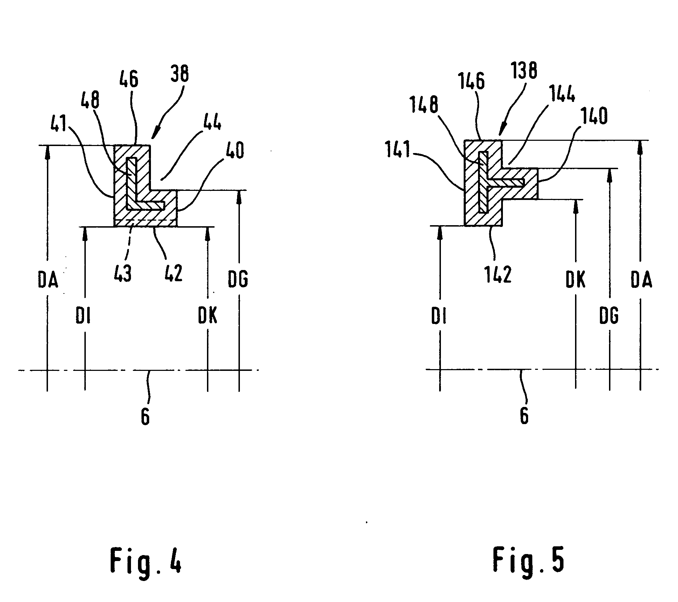

Das Trägerelement 5 weist den ersten Luftführungskanal 12 auf, der zu der von dem Lagerabschnitt 11, dem Trägerelement 5 und den beiden Abschlusselementen 29, 30 umschlossenen Luftkammer 13 führt. Die Druckbeaufschlagung der Luftkammer 13 erfolgt über den ersten Luftführungskanal 12 von einem nicht dargestellten und am Fahrzeug ortsfest angebrachten Druckluftreservoir oder Kompressor. Auf den Sitzflächen 18a und 18b sind bezüglich der Dichtringanordnungen 34, 35 jeweils in spiegelbildlicher Anordnung ein erster Dichtungsring 35 und ein zweiter Dichtungsring 39 angeordnet. Die beiden ersten Dichtringe 38 sind gemäß Figur 4 gestaltet.

Die nähere Beschreibung der ersten Dichtringe 28 erfolgt noch anhand Figur 4. Die beiden ersten Dichtringe 38 wirken mit einer ersten Dichtfläche 40 mit der entsprechenden ersten Gegendichtfläche 36 bzw. zweiten Gegendichtfläche 37 zusammen. Parallel zur radial verlaufenden ersten Dichtfläche 40 weist der erste Dichtring 38 eine zweite Dichtfläche auf, die der ersten Dichtfläche 40 abgewandt ist und einen größeren Flächeninhalt als diese aufweist. Die ersten Dichtringe 38 gemäß Figuren 2 und 3 weisen eine erste Dichtfläche 40 auf, die einen kleinen Durchmesser DK besitzt, der dem Innendurchmesser DI des ersten Dichtringes 38 entspricht. Die ersten Dichtringe 38 sind mit der Bohrung 42 mit dem Innendurchmesser DI auf der Sitzfläche 18 bzw. 18a angeordnet, und zwar dergestalt, dass sie in Richtung der Längsachse 6 verstellbar sind, in Drehrichtung jedoch um die Achse Y sich mit dem Trägerelement 5 drehfest sind. Dies kann beispielsweise durch die Anordnung einer oder mehrerer axial verlaufenden Nuten 43 im ersten Dichtring 38 erfolgen, welche mit einem in die Sitzfläche 18, 18a teilweise eingelassenen und sich parallel zur Längsachse 6 erstreckenden und nicht dargestelltem Keil zusammenwirken.

Da der große Durchmesser DG des ersten Dichtringes 38 kleiner als der Außendurchmesser DA des ersten Dichtringes 38 ist, ergibt sich zwischen der ersten Gegendichtfläche 36 und der zweiten Gegendichtfläche 37 und den diesen jeweils zugeordneten ersten Dichtringen 38 eine Entlastungskammer 44. Diese Entlastungskammern 44 sind mit der Luftkammer 13 verbunden, da der Außendurchmesser DA der ersten Dichtringe 38 kleiner ist als der Durchmesser der zylindrischen Fläche 31 a des Lagerabschnitt 11. Ein in der Luftkammer 13 herrschender Druck setzt sich also in die Entlastungskammern 44 fort. Die Ringfläche zwischen dem großen Durchmesser DG und dem Außendurchmesser DA im Bereich der Kammer versucht also unter dem in der Kammer 44 herrschenden Druck die ersten Dichtringe 38 von der zugehörigen Gegendichtfläche 37 bzw. 38 abzuheben. Die ersten Dichtringe 38 werden jedoch durch die Vorspannkraft der Dichtabschnitte 45 der zweiten Dichtringe 39 und den auf diese wirkenden Druck in der Luftkammer 13 beaufschlagt, so dass sie entsprechend an die Gegendichtfläche 36 bzw. 37 mit ihrer ersten Dichtfläche 40 angedrückt werden. Dabei wirkt die Restfläche außerhalb der Ringkante des Dichtabschnittes 45 bis zur Außenfläche mit dem Außendurchmesser DA praktisch nicht unterstützend, weil im Bereich der Entlastungskammer 44 eine entsprechend große entlastend wirkende Fläche entsteht. Das ist jedoch anders, wenn der große Durchmesser DG der ersten Dichtfläche 40 größenmäßig dem Außendurchmesser DA des ersten Dichtringes 38 entspricht. Die beiden zweiten Dichtringe 39 sind mit ihrem Befestigungsabschnitt 47 auf der Sitzfläche 18a bzw. 18b fest angeordnet. Der Dichtabschnitt 45 setzt jeweils nahe zur zugehörigen Sitzfläche 18a bzw. 18b an und erstreckt sich von dort geneigt in Richtung zur zweiten Dichtfläche 41 und liegt dort mit einer gewissen Vorspannung an. Reicht diese Vorspannung nicht, können Federn vorgesehen sein, die die beiden ersten Dichtringe 38 in Anlage zu der zugehörigen Gegendichtfläche 36 bzw. 37 der Abschlusselemente 29 bzw. 30 drücken. Da die beiden zweiten Dichtringe 39 und die zugehörigen ersten Dichtringe 38 drehfest mit dem Trägerelement 5 verbunden sind, tritt zwischen beiden keine Relativdrehung auf. Die Dichtabschnitte 45 der beiden zweiten Dichtringe 39 erlauben einen bestimmten Axialweg, so dass bei Verschleiß an den ersten Dichtflächen 40 der beiden ersten Dichtringe 38 jeweils eine Nachstellung in Axialrichtung um den Verschleißweg X möglich ist.

Die Anpressverhältnisse des ersten Dichtringes 38 mit seiner ersten Dichtfläche 40 an die ersten Gegendichtflächen 36 bzw. 37 können einerseits über die Größe, d.h. den Flächeninhalt, der ersten Dichtfläche 40 und deren radialer Anordnung zwischen dem Innendurchmesser DI und dem Außendurchmesser DA variiert werden. Es kann bei gleichgroßem Flächeninhalt der ersten Dichtfläche 40 wie bei Figur 4 eine Anordnung gemäß Figur 5 getroffen werden, so dass sich eine erste Dichtfläche 140 ergibt, die als Ringfläche gestaltet, den gleichen Flächeninhalt aufweist wie die Dichtfläche 40 bei der Ausführungsform gemäß Figur 4. Sie ist jedoch auf einem anderen Durchmesser angeordnet ist, d.h. der kleine Durchmesser DK ist größer als der Innendurchmesser DI und der große Durchmesser DG ist unter Berücksichtung des Flächeninhaltes entsprechend größer als der kleine Durchmesser DK. Damit nimmt auch die vom Druck in der Kammer K beaufschlagte Entlastungskammer 144, d.h. die zur Außenfläche verbleibende Ringfläche, ab. Die entlastend wirkende Fläche zwischen dem großen Durchmesser DG und dem Außendurchmesser DA wird kleiner als die bei der Ausführungsform gemäß Figur 4. Der auf den ringförmigen Dichtabschnitt 44 des zweiten Dichtrings 39 und die Restfläche zwischen der äußeren Ringkante des Dichtabschnittes 45, mit dem der zweite Dichtring 39 an der zweiten Dichtfläche 111 anliegt, und dem Außendurchmesser DA der Außenfläche 146 einwirkende Druck führt zu einer höheren Anpressung des ersten Dichtringes 138 mit seiner ersten Dichtfläche 140 gegen die entsprechende Gegendichtfläche der beiden Abschlusselemente als dies der Fall bei der Ausbildung gemäß Figur 4 ist. Entsprechend den gewünschten Anpressverhältnissen kann also die erste Dichtfläche 140 maximal so radial nach außen von der Längsachse Y verlagert werden, dass deren großer Durchmesser DG dem Außendurchmesser DA entspricht, so dass praktisch die gesamte Fläche des Dichtabschnittes und die gegebenenfalls vorhandene Restfläche unter dem Druck eine hohe Anpresskraft erzeugen, weil keine Entlastungskammer entsteht.

Aus den beiden Figuren 4 und 5 ist auch erkennbar, dass zur Verstärkung der beiden ersten Dichtringe 38, 138 eine Verstärkungseinlage 48, 148 benutzt werden kann, um eine hohe Stabilität zu erreichen, so dass gewährleistet ist, dass die erste Dichtfläche 40 bzw. 140 auch über eine lange Lebensdauer eine exakte Anlage zu der entsprechenden Gegendichtfläche aufrechterhält.

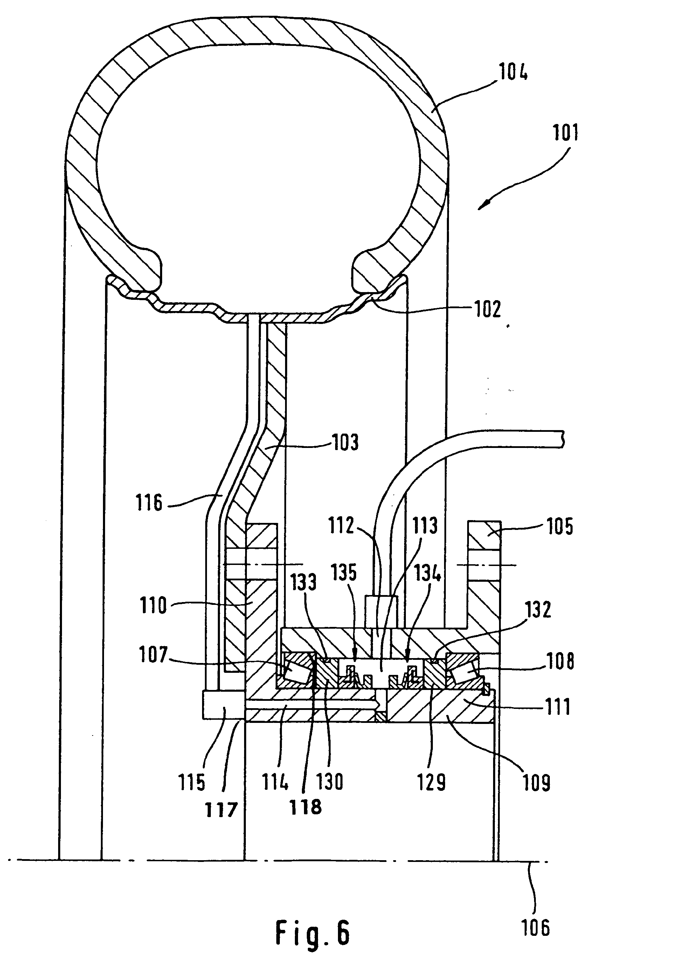

Aus Figur 6 ergibt sich eine alternative Gestaltung für die Lagerungsanordnung, wobei für die Ausführungsform gemäß Figur 1 entsprechende Bauteile mit Positionszeichen versehen sind, die um den Zahlenwert 100 gegenüber denen der Figur 1 erhöht. Der Hauptunterschied besteht darin, dass bei der Ausführungsform gemäß Figur 6 die Radnabe 105 mit ihrem Lagerabschnitt 111 nicht auf, sondern in dem Trägerelement 105 gelagert ist. Das Trägerelement 105 ist als Winkelring gestaltet und dient beispielweise zur Verbindung mit einer Radaufhängung eines Fahrzeuges. Dementsprechend befindet sich der erste Luftführungskanal 12 in dem Trägerelement 105 und der zweite Luftführungskanal 114 in dem Lagerabschnitt 111 der Radnabe 109. Der zweite Luftführungskanal 114 ist im Bereich der Anlagefläche des Radflansches 110 nach außen geführt und in diesem Bereich ist auch das Ventil 115 mit dem zweiten Luftführungskanal 114 verbunden. Von dort führt die Luftleitung 116 zur Felge 102. Die beiden Dichtringanordnungen 134 und 135 sind dem Lagerabschnitt 111 zugeordnet, während die beiden Abschlusselemente 129, 130 undrehbar mit dem Trägerelement 105 verbunden sind. Der erste Luftführungskanal 112 kann beispielsweise über einen Druckschlauch mit dem Kompressor bzw. der Druckversorgungseinrichtung bzw. Reifenfüllanlage versehen sein.

### Bezugszeichenliste

- 1,101: Rad
- 2, 102: Felge
- 3, 103: Radkörper
- 4, 104: Reifen
- 5, 105: Trägerelement / Achszapfen
- 6, 106: Längsachse
- 7, 107: erste Wälzkörperreihe
- 8, 108: zweite Wälzkörperreihe
- 9, 109: Radnabe
- 10, 110: Radflansch
- 11, 111: Lagerabschnitt
- 12, 112: erster Luftführungskanal
- 13, 113: Luftkammer
- 14, 114: zweiter Luftführungskanal
- 15, 115: Ventil
- 16, 116: Luftleitung
- 17: Außenfläche
- 18, 18a, 18b: Sitzfläche
- 19: erster Lagerinnenring
- 20: erster Lageraußenring
- 21: erste Wälzkörper
- 22: zweiter Lagerinnenring
- 23: zweiter Lageraußenring
- 24: zweite Wälzkörper
- 25: Mutter
- 26: Dichtklappe
- 27: Stopfen
- 28: Lagerdichtung
- 29, 129: erstes Abschlusselement
- 30, 130: zweites Abschlusselement
- 31: zylindrische Fläche
- 32: erste Dichtung
- 33: zweite Dichtung
- 34, 134: erste Dichtringanordnung
- 35, 135: zweite Dichtringanordnung
- 36: erste Gegendichtfläche
- 37: zweite Gegendichtfläche
- 38, 138: erster Dichtring
- 39: zweiter Dichtring
- 40, 140: erste Dichtfläche
- 41, 141: zweite Dichtfläche
- 42,142: Bohrung
- 43: Nut
- 44, 144: Entlastungskammer
- 45: Dichtabschnitt
- 46, 146: Außenfläche
- 47: Befestigungsabschnitt
- 48, 148: Verstärkungseinlage
- DA: Außendurchmesser
- DG: großer Durchmesser
- DI: Innendurchmesser
- DK: kleiner Durchmesser
- X: Verschleißweg

## Patentansprüche

1. Lagerungsanordnung für ein Rad (1, 101) eines Fahrzeugs, dem ein mit Luft über eine Reifenfüllanlage füll- oder entlüftbarer Reifen (4, 104) zugeordnet ist, umfassend
- ein Trägerelement (5, 105),
- das eine Längsachse (6, 106) bildet,
- das um die Längsachse (6, 106) undrehbar gehalten ist,
- das mindestens eine Sitzfläche (18, 118) für mindestens einen Lagerring (19, 22) und/oder die mindestens eine Laufbahn einer Wälzlageranordnung mit zwei Wälzkörperreihen (7, 8, 107, 108) bildet, und
- das einen ersten Luftführungskanal (12, 112) aufweist, der einerseits zur Verbindung mit der Reifenfüllanlage dient und der andererseits zu einer Fläche des Trägerelementes (5, 105) offen ist, welche sich zwischen den Wälzkörperreihen (7, 8; 107, 108) befindet,
- eine Radnabe (9, 109),
- die einen Radflansch (10, 110) aufweist, mit dem das Rad (1, 101) verbindbar ist,
- die einen Lagerabschnitt (11, 111) aufweist, der koaxial zum Trägerelement (5, 105) angeordnet ist,
- wobei ein Abschnitt des Trägerelements (5, 105), dem die Wälzkörper reihen (7, 8; 107, 108) zugeordnet sind, und der Lagerabschnitt (11, 111) umeinander angeordnet sind und eine Luftkammer (13, 113) bilden,
- die einen zweiten Luftführungskanal (14, 114) aufweist, der zur Luftkammer (13, 113) und zu einer Außenfläche (17, 117) der Radnabe (9, 109) offen ist, wobei die Öffnung zur Außenfläche (17, 117) zur Verbindung mit dem Reifen (4, 104) über Verbindungsmittel (16, 116) dient,
- eine Dichtungsanordnung
- mit zwei Abschlusselementen (19, 30; 129, 130), die axial mit Abstand voneinander jeweils zu einer Wälzkörperreihe (7, 8; 107, 108) hin angeordnet sind und einen radialen Abstand zwischen dem Trägerelement (5, 105) und dem Lagerabschnitt (11, 111) der Radnabe (9, 109) überbrücken und die Luftkammer (13, 113) seitlich abschließen, und
- welche Dichtungen (32, 33; 132, 133) und Dichtringanordnungen (34, 34; 134, 135) umfasst,
die zwischen jeweils einem Abschlusselement ( 29, 30; 129, 130) und dem Trägerelement (5, 105) und zwischen jeweils einem Anschlusselement ( 29, 30; 129, 130) und der Radnabe (9, 109) abdichten.

2. Lagerungsanordnung nach Anspruch 1,
**dadurch gekennzeichnet,**
**dass** die Dichtringordnungen (34, 35, 134, 135) in der Luftkammer (13, 113)
- je Abschlusselement (29, 30; 129, 130) einen ersten Dichtring (38, 138), der eine radial verlaufende erste Dichtfläche (40, 140) zur dichtenden axialen Anlage an einer ersten Gegendichtfläche (36) des zugehörigen Abschlusselementes (29, 30; 129, 130) und eine parallel zur ersten Dichtfläche (40, 140) verlaufende zweite Dichtfläche (41, 141) aufweist und der entlang der Längsachse (6, 106) axial verschiebbar angeordnet ist, umfasst und
- je Abschlusselement (29, 30; 129, 130) einen zweiten Dichtring (39) aufweist, der einen ringförmigen Befestigungsabschnitt (47) und einen daran ansetzenden ringmembranartigen Dichtabschnitt (45) aufweist, der mit einer dem Befestigungsabschnitt (47) entfernten Ringkante, dem Befestigungsabschnitt (47) abgewandt, axial an der zweiten Dichtfläche (41, 141 ) des ersten Dichtringes (38, 138) anliegt.

3. Lagerungsanordnung nach Anspruch 1,
**dadurch gekennzeichnet,**
**dass** zwischen dem Trägerelement (105) und den Abschlusselementen (129, 130) jeweils eine Dichtung (132, 133) angeordnet ist.

4. Lagerungsanordnung nach Anspruch 1,
**dadurch gekennzeichnet,**
**dass** jeweils zwischen den Abschlusselementen (29, 30) und der Radnabe (9) eine Dichtung (32, 33) angeordnet ist.

5. Lagerungsanordnung nach einem der Ansprüche 3 oder 4,
**dadurch gekennzeichnet,**
**dass** das Abschlusselement (29, 30; 129, 130) zu dem Bauteil, zu dem es über die Dichtung (32, 33; 132, 133) abgedichtet ist, in Ruhe verbleibt.

6. Lagerungsanordnung nach Anspruch 1,
**dadurch gekennzeichnet,**
**dass** das Trägerelement (5) durch einen Achszapfen gebildet ist.

7. Lagerungsanordnung nach Anspruch 2,
**dadurch gekennzeichnet,**
**dass** die zur Dichtringanordnung (34, 35; 134, 135) in der Luftkammer (13) gehörenden ersten Dichtringe (38, 138) und zweiten Dichtringe (39) dem Trägerelement (5) zugeordnet sind, wobei die ersten Dichtringe (38, 138) axial verschiebbar und die zweiten Dichtringe (39) mit einem Befestigungsabschnitt (45) ortsfest am Trägerelement (5) angebracht sind.

8. Lagerungsanordnung nach Anspruch 2,
**dadurch gekennzeichnet,**
**dass** die zur Dichtringordnung in der Luftkammer (113) gehörenden ersten Dichtringe (38, 138) und zweiten Dichtringe (39) dem Lagerabschnitt (111) der Radnabe (109) zugeordnet sind, wobei die ersten Dichtringe (38, 138) axial verschiebbar und die zweiten Dichtringe (39) mit einem Befestigungsabschnitt (45) ortsfest am Lagerabschnitt (111) angebracht sind.

9. Lagerungsanordnung nach Anspruch 7,
**dadurch gekennzeichnet,**
**dass** die ersten Dichtringe (38, 138) axial in Richtung der Längsachse (6) verschiebbar und in Drehrichtung um die Längsachse (6) fest mit dem Trägerelement (5) verbunden sind.

10. Lagerungsanordnung nach Anspruch 8,
**dadurch gekennzeichnet,**
**dass** die ersten Dichtringe (38, 138) axial in Richtung der Längsachse (106) verschiebbar und in Drehrichtung um die Längsachse (106) fest mit dem Lagerabschnitt (111) verbunden sind.

11. Lagerungsanordnung nach Anspruch 2,
**dadurch gekennzeichnet,**
**dass** die erste Dichtfläche (40, 140) des ersten Dichtringes (38, 138) als Ringfläche gestaltet ist und einen kleinen Durchmesser (DK) und einen großen Durchmesser (DG) aufweist,
**dass** der erste Dichtring (38, 138) ferner einen Innendurchmesser (DI) und einen Außendurchmesser (DA) aufweist, und dass bei Zuordnung des ersten Dichtringes (38, 138) zum Trägerelement (5) oder zum Lagerabschnitt (111) der kleine Durchmesser (DK) gleich/größer als der Innendurchmesser (DI) und der große Durchmesser (DG) gleich/kleiner als der Außendurchmesser (DA) ist, wobei die erste Dichtfläche kleiner als eine vom Innendurchmesser (DI) und Außendurchmesser (DA) begrenzte Ringfläche ist.
